# EUROPEAN PATENT SPECIFICATION

(11) **EP 1 463 239 B1**
(45) Date of publication and mention of the grant of the patent: **10.10.2007**
(21) Application number: 04300090.0
(22) Date of filing: 20.02.2004
(51) Int. Cl.: H04L 12/24, H04L 29/06, H04L 12/56

(54) **Method and apparatus for protection of network infrastructure and for secure communication of control information**
Verfahren und Vorrichtung zum Schutz einer Netzwerkinfrastruktur und zur gesicherten Kommunikation von Kontrollinformationen
Procédé et dispositif de protection d'infrastructure de réseau et de communication sécurisée d'informations de contrôle

(30) Priority: 20.02.2003 US 448860 P
(43) Date of publication of application: 29.09.2004
(73) Proprietor: Alcatel Lucent, 75008 Paris (FR)
(72) Inventor: Zinin, Alexey D., Sunnyvale, CA 94087 (US)
(74) Representative: Korakis-Ménager, Sophie

(56) References cited:
- WO-A-01/69852
- JOHANSSON P: "IPv4 over IEEE 1394 - RFC 2734" NETWORK WORKING GROUP REQUEST FOR COMMENTS, XX, XX, December 1999 (1999-12), pages 1-29, XP002238651
- KUNG H T ET AL: "TCP trunking: design, implementation and performance" HARVARD UNIVERSITY, 31 October 1999 (1999-10-31), pages 222-231, XP010356965
- ARMITAGE G: "MPLS: THE MAGIC BEHIND THE MYTHS" IEEE COMMUNICATIONS MAGAZINE, IEEE SERVICE CENTER. PISCATAWAY, N.J, US, vol. 38, no. 1, January 2000 (2000-01), pages 124-131, XP000908346 ISSN: 0163-6804
- BALTATU M ET AL: "Security issues in control, management and routing protocols" COMPUTER NETWORKS, ELSEVIER SCIENCE PUBLISHERS B.V., AMSTERDAM, NL, vol. 34, no. 6, December 2000 (2000-12), pages 881-894, XP004304827 ISSN: 1389-1286
- ED OSKIEWICZ, NIGEL EDWARDS: "A Model for Interface Groups" ANSA, 19 May 1994 (1994-05-19), XP002290902 CAMBRIDGE, UNITED KINGDOM Retrieved from the Internet: URL:http://www.ansa.co.uk/ANSATech/94/Prim ary/100201.pdf> [retrieved on 2004-08-02]
- HLUCHYJ M G ET AL: "Queueing disciplines for integrated fast packet networks" DISCOVERING A NEW WORLD OF COMMUNICATIONS. CHICAGO, JUNE 14 - 18, 1992. BOUND TOGETHER WITH B0190700, VOL. 3, PROCEEDINGS OF THE INTERNATIONAL CONFERENCE ON COMMUNICATIONS, NEW YORK, IEEE, US, vol. VOL. 4, 14 June 1992 (1992-06-14), pages 990-996, XP010061960 ISBN: 0-7803-0599-X

## Description

### BACKGROUND OF THE INVENTION

### (1) Field of the Invention

The following disclosure relates generally to protection of network infrastructure and more particularly to providing for discrimination of data from trusted sources.

### (2) Description of the Related Art

Modem communication networks are typically based on a multi-layered hierarchical model, such as the International Standards Organization (ISO) Open Systems Interconnection (OSI) reference model. An open system is one that is open to others for the purpose of information exchange in the sense that all open systems use the applicable standards. OSI provides an architecture that defines communication tasks. Since computer communication for any given task can be too complex to be conveniently considered in its entirety, it may instead be considered as a set of layers each successive layer built on top of a lower layer and using its facilities. OSI allows abstraction of the specific details by which each layer is implemented. Rather, OSI allows specification of the functionality of the layers and their interfaces to higher and lower layers.

By standardizing the function of layers and their interfaces, OSI allows modifications to be made at a given layer without adversely affecting functionality at the other layers. OSI uses a seven-layer model. Each layer (called(n)-layer) provides a service to the layer immediately above it in the hierarchy ((n+1)-layer). It does this by using the services of the layer below it ((n-1- layer). Clearly the lowest layer uses the physical communication medium. Each layer is defined by the services it provides to the layer above. Layers communicate with each other using a defined interface. For each layer there is the definition of a protocol that governs how peer entities (processes on the same level) communicate with each other. The seven layers of the OSI model and their corresponding levels, from highest to lowest, are as follow: Application-7, Presentation-6, Session-5, Transport-4, Network-3, Data Link-2, Physical-1.

As society has recently placed increasing emphasis on use of network infrastructure, so too have the instances of abuse of networking technology increased. Various elements of society have undertaken to exploit weaknesses of network infrastructure for a variety of political, social, financial, and recreational purposes.

While some attacks have focused on endpoints within networks, such as servers or clients, other attacks have focused on network infrastructure interconnecting such endpoints. Elements of network infrastructure typically not only pass traffic through them from a source to a destination, but, in some cases, may also serve as a source or destination for traffic originated by or destined for them, such as control traffic. Such control traffic typically passes through the same media according to similar protocols as regular network traffic. Thus, such control traffic is often characterized as "in-band" signaling. Historically, in-band signaling has been, and continues to be, more vulnerable to exploitation by end users than out-of-band signaling, which is transmitted in a manner to which end users typically do not have access.

While a worst-case exploitation of network infrastructure would likely involve synthesizing unauthorized control traffic that perfectly mimics authorized control traffic, thereby allowing complete control over the network infrastructure to be obtained, some sort of protective mechanism is almost always provided to prevent such extreme exploitation. For example, malevolently introduced data might be passed indistinguishably at one or more layers of a multi-layered hierarchical model, but might be recognized and discarded as invalid at another layer.

Nonetheless, certain characteristics of multi-layered hierarchical models may be exploited to malevolent ends. Since different layers of a multi- layered hierarchical model can operate largely independently of one another, weaknesses that may exist at only one or a subset of the layers may be exploited to some extent even when one or more other layers are immune to similar weaknesses. Thus, data that appears to be valid at one or more layers may be passed through a network by network infrastructure elements, such as routers, to its intended destination, which may be a particularly targeted router, for example. While the particularly targeted router may process the data normally at one or more layers, it may reject the data at another layer. While the rejection of the data prevents complete deception of the particularly targeted router, it nonetheless consumes processing capability of the particularly targeted router. If an attacker sends copious amounts of spurious data directed at a particular element of network infrastructure, that element may be overwhelmed by the amount of processing capability needed to process the spurious data. Consequently, it may be impaired from processing bona fide network traffic or, in the worst case, may be overloaded to the point of failure. Attacks based on such phenomena are typically referred to as "denial of service" (DoS) attacks, in that they deny the use of services that would otherwise be provided by the affected elements. Variations on DoS attacks include examples such as "distributed denial of service" (DDoS) attacks, which include counterfeit traffic from a plurality of sources.

The packet authentication mechanisms currently used in Internet routing protocols (e.g., Open Shortest Path First (OSPF), Message Digest 5 protection of Transmission Control Protocol traffic (TCP-MD5)) leave a generic threat open for an outside attacker--overloading the control central processing units (CPUs) of the routers with packets that look like they belong to a valid routing protocol adjacency or a peering session, yet are fake and would be discarded because of invalid digest value. Because all internet protocol (IP) parameters of valid and faked packets look absolutely identical, it is impossible to reject faked packets earlier in the process. This leads to overloading of internal queues allocated for control traffic (routing and signaling protocols), and hence dropping of legitimate control packets. This, combined with high CPU utilization, results in destruction of routing protocol sessions and finally in denial of service by the network.

Another example of an attack mountable against routers is the simple "synchronize" TCP connection setup packet flood (SYN-flood) attack, which could potentially exhaust the router's CPU. A SYN-flood attack takes advantage of the flaw of TCP three- way handshaking behavior. An attacker makes connection requests aimed at its intended target using packets with unreachable source addresses. The intended target is not able to complete the connection requests and, as a result, the intended target wastes its network resources. A relatively small flood of bogus packets can tie up memory, CPU, and applications, which can induce failure of the intended target.

The in-band nature of IP routing and signaling creates a perfect environment for an attacker to put the network itself out of service. The fundamental problems leading to the possibility of a DoS attack on a router are (a) legitimate and forged packets share resources inside the router (such as queues) before the authentication check is performed, and (b) the negative authentication decision is computationally expensive enough to discourage router vendors from performing the check at the line rate. In the latter case, it is important to note that the lack of line-rate processing significantly increases the router's susceptibility to a distributed DoS attack.

Potential approaches to the problem known to date include:
1. Adding specialized hardware (HW) elements to the line - card architecture that would allow the line cards to identify packets that need to be authenticated (e.g., OSPF, Border Gateway Protocol (BGP), (Resource Reservation Protocol (RSVP)) and perform the MD5 check at the line rate (before the packets are put in any queue), as well as identify TCP SYN packets and limit the rate at which they are sent to the control card.
2. Perform aggressive packet filtering at the edges of the network, on both customer-facing and service provider peering interfaces to make sure that packets destined for the internal routers are not received from outside the network.
3. Use a completely separate set of links for control protocols and customer data, i.e. out-of-band network control.

Below are the disadvantages of these methods (correspondingly):
1. From the service provider's perspective, additional HW increases the cost of the system and requires upgrades of the line- cards of all routers in the network. From the Internet security perspective, it will take years before a considerable number of service providers upgrade their routing infrastructure, and thus before the threat of DoS attack on the Internet routing system is sufficiently mitigated.
2. The majority of today's deployed Internet core routers do not have the ability to perform line-rate access control list (ACL) processing at high speeds, which means that the inter- service provider links will remain insecure. Combined with the fact that not all service providers filter potentially dangerous packets on the customer interfaces, this approach has the same disadvantages from the deployment and Internet security perspective as the first approach.
3. While the out-of-band control scheme is extremely interesting, implementation could require substantial modification to the routing protocols and complete re-architecting of the service provider networks.

Document XP002238651, "IPv4 over IEEE 1394 - RFC 2734" by JOHANSSON P, Networking Working Group, December 1999 (1999-12) pages 1-29 specifies how to use IEEE Std 1394-1995, Standard for a High Performance Serial Bus (and its supplements), for the transport of Internet Protocol Version 4 (IPv4) datagrams; it defines the necessary methods, data structures and codes for that purpose. These include not only packet formats and encapsulation methods for datagrams, but also an address resolution protocol (1394 ARP) and a multicast channel allocation protocol (MCAP). Both 1394 ARP and MCAP are specific to Serial Bus; the latter permits management of Serial Bus resources when used by IP multicast groups.

Document XP010356965, "TCP trunking: design, implementation and performance" by KUNG H T et Al., Harvard University, 31 October 1999 (199-10-31), pages 222-231 discloses TCP trunk as an aggregate traffic stream whose data packets are transported at a rate dynamically determined by TCPOs congestion control. Typically such a trunk is implemented on top of a layer-2 virtual circuit or an MPLS label switched path. A management TCP connection is used to regulate the rate at which the trunk transmits its data packets. Setting up a TCP trunk over a circuit or a path involves only the two end nodes of a trunk to implement the management TCP connection. A TCP trunk can guarantee minimum bandwidth while being able to grab additional bandwidth when it is available. TCP trunking can be an effective tool for network operators in managing bandwidth sharing between aggregates.

Document XP004304827, "Security issues in control, management and routing protocols" by BALTATU M; LIOY A; MAINO F; MAZZOCCHI D, discloses some countermeasures for attacks against Internet control (routing protocols) and management protocols.
The proposed solution against such attacks is to authenticate the source of the message, whereby IPsec cryptographic authentication is used. Local network administrators have to decide if the overhead introduced by IPsec processing is acceptable.

The present invention is defined by the subject matter of the appended claims.

### BRIEF DESCRIPTION OF THE SEVERAL VIEWS OF THE DRAWINGS

Figure 1 is block diagram illustrating a system for protection of network infrastructure in accordance with at least one embodiment of the present invention.
Figure 2 is a flow diagram illustrating a method for protection of network infrastructure in accordance with at least one embodiment of the present invention.

### DETAILED DESCRIPTION OF THE INVENTION

At least one embodiment of the present invention provides protection of network infrastructure and provides for secure communication of control information to and among such network infrastructure. As an example, a method and apparatus is provided to allow for communicating Layer-3 control information in a communication network. Such control information may be verified to have come from a trusted source without requiring unnecessary computation to perform such verification. Thus, protection of network infrastructure from malicious transmissions, including denial of service attacks, may be provided. Optionally, rate-limited queuing may be provided for control information that cannot be so verified, thereby providing backwards compatibility while avoiding risks of harm from malicious transmissions.

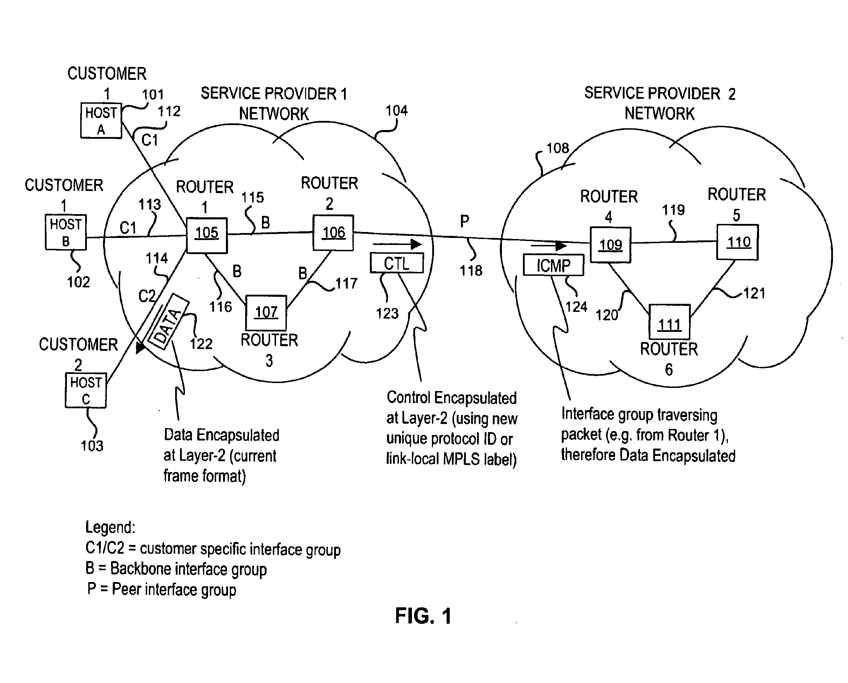

Figure 1 is block diagram illustrating a system for protection of network infrastructure in accordance with at least one embodiment of the present invention. The system comprises a plurality of hosts 101, 102, and 103 coupled to a router 105 of a service provider 1 network 104. A service provider 1 network 104 comprises a plurality of routers 105, 106, and 107. Host A 101 of customer 1 is coupled to router 1 105 of service provider 1 network 104 via connection 112. Host B 103 of customer 1 is coupled to router 1 105 of service provider 1 network 104 via connection 113. Host C 103 of customer 2 is coupled to router 1 105 of service provider 1 network 104 via connection 114. Router 1 105 is coupled to router 2 106 via connection 115 and to router 3 107 via connection 116. Router 2 106 is coupled to router 3 107 via connection 117.

Router 2 106 of service provider 1 network 104 is coupled to router 4 109 of service provider 2 network 108 via connection 118. Service provider 2 network 108 comprises a plurality of routers 109, 110, and 111. Router 4 109 is coupled to router 5 110 via connection 119 and to router 6 111 via connection 120. Router 5 110 is coupled to router 6 111 via connection 121. The numbers of hosts, routers, service provider networks, and connections illustrated in Figure 1 is merely exemplary; other numbers of these features may be implemented.

Data packet 122 being communicated over connection 114 depicts data encapsulated at layer 2 (current frame format). Control packet 123 being communicated over connection 118 depicts control encapsulated at layer 2 (using new unique protocol ID or link-local MPLS label). ICMP packet 124 being communicated over connection 118 depicts interface group traversing packet (e.g., from router 1 105), which is therefore data encapsulated.

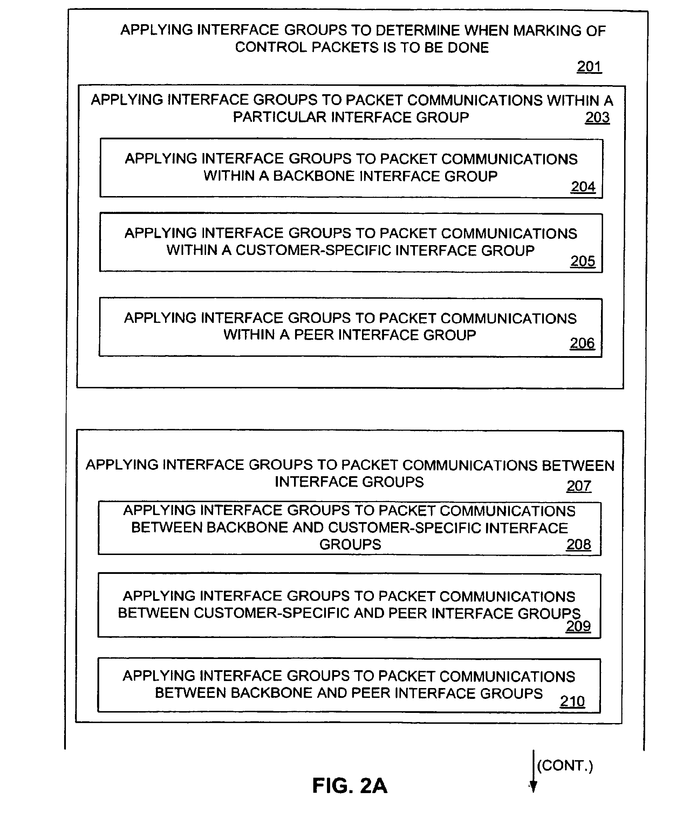

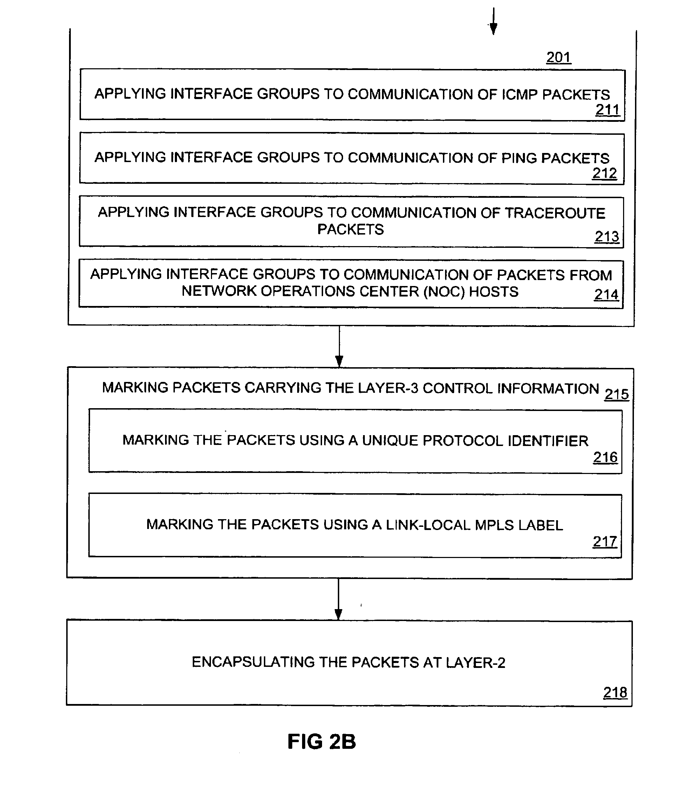

Figure 2 is a flow diagram illustrating a method for protection of network infrastructure in accordance with at least one embodiment of the present invention. The method comprises step 201, step 215, and step 218.

In step 201, interface groups are applied to determine when marking of control packets is to be done. Step 201 may comprise step 203, step 207, step 211, step 212, step 213, and/or step 214. In step 203, interface groups are applied to packet communications within a particular interface group. Step 203 may comprise step 204, step 205, and/or step 206. In step 204, interface groups are applied to packet communications within a backbone interface group. In step 205, interface groups are applied to packet communications within a customer-specific interface group. In step 206, interface groups are applied to packet communications within a peer interface group.

In step 207, interface groups are applied to packet communications between interface groups. Step 207 may comprise step 208, step 209, and/or step 210. In step 208 interface groups are applied to packet communications between backbone and customer-specific interface groups. In step 209, interface groups are applied to packet communications between customer- specific and peer interface groups. In step 210, interface groups are applied to packet communications between backbone and peer interface groups.

In step 211, interface groups are applied to communication of ICMP packets. In step 212, interface groups are applied to communication of ping packets. In step 213, interface groups are applied to communication of traceroute packets. In step 214, interface groups are applied to communication of packets from network operation center (NOC) hosts.

In step 215, packets carrying the layer-three control information are marked. Step 215 may comprise step 216 and/or step 217. In step 216, the packets are marked using a unique protocol identifier. In step 217, the packets are marked using a link-local MPLS label. In step 218, the packets are encapsulated at layer 2.

In accordance with one or more embodiments of the invention, protection may be provided based on the fact that there are only a limited number of devices in a network that have a legit imate right to send a packet to a router's control plane. This set of devices includes, of course, other routers in the service provider's network, network operations center (NOC) stations, as well as other trusted devices. The rest of the devices in the Internet, including user hosts, and routers in other service provider networks should not need to send packets to the router's control plane.

Two layers of additional measures may be implemented to enhance the security of routing control communications. The first is to mark at Layer- 2 (L2) packets containing information for the control plane, herein referred to as control packets. The second is to apply a new concept of interface groups, whereby a router can determine whether a packet should be marked or not.

The marking of control packets is done by encapsulating the packets at Layer-2 in a way that uniquely identifies the Layer-2 frames as carrying trusted control information. This is referred to herein as control encapsulation. Routers exchange control packets (such as routing protocol or signaling protocol packets) using the control encapsulation. The purpose of control encapsulation is to allow a router to easily and quickly identify the trusted control packets, after which they are immediately forwarded on to the control plane of the router, while unmarked packets containing control information are considered untrusted and put on a heavily rate-limited queue or dropped. Use of explicit manual configuration to allow receiving of control-encapsulated packets ensures that only packets from trusted routers are accepted and considered trusted. Rate-limited queuing the unmarked control packets has the benefit of supporting routers without the control encapsulation functionality while eliminating the sus ceptibility of the router to flood-type DoS attacks on its control plane.

One or more embodiments of the present invention may be implemented for a variety of communications techniques, including, for example, Internet (IP) routing and Multi-Protocol Label Switching (MPLS). Other embodiments may be implemented with respect to other communication techniques in accordance with the general principles set forth herein.

The control encapsulation may be done in a number of ways. As a first example, a new protocol identifier (ID) could be defined, such as would be possible using the Ether_type parameter. For example, new protocol IDs could be defined such as Internet Protocol version 4 control (IPv4-control) and Internet Protocol version 6 control (IPv6-control). As a second example, a link-local MPLS label may be used for the control packets. In this case, a single label value would be reserved, declared to be link-local, and this value would be disallowed from being used for transit to MPLS Label- Switched Paths (LSPs). Since the label would only have significance on local links it could be re-used on all links. Packets that do not carry control information would be encapsulated in the usual manner as is done now, this manner is referred to herein as data encapsulation.

To support MPLS networks, whenever a control packet is put on an LSP, the reserved label is put on the label stack. The receiving router will then be able to recognize the control traffic by looking at this label. If penultimate hop popping is requested by the receiver, those packets will have only the reserved label, which will essentially be equal to the MPLS -based control encapsulation, which means no special case for MPLS on the receiving side.

The implementation of interface groups enables a router to determine when control encapsulation should or should not be used. Interface groups may be implemented for backbone connections, customer-specific interface groups, and interface groups for peering with other service providers. As an example, only control packets passing within an interface group would be control encapsulated, while control packets traversing interface groups would be data encapsulated. This policy would be followed to maintain the level of trust established between members of an interface group, and is based on the fact that normally control packets would not originate from outside the interface group, however there are some valid exception, e.g., Internet Control Message Protocol (ICMP) packets. Peering routers that do no t support control encapsulation would be configured to accept data encapsulated packets at their control planes without unnecessary delay.

A small modification is required to a router's forwarding logic to cause it to normally allow only control-encapsulated IPv4 packets to be sent to its control plane (while other packets may be put on a heavily rate-limited queue or dropped), as well as to choose the right encapsulation type based on whether the packet is trusted or not and whether it is crossing an interface group boundary. This step could easily be performed at the line rate without any additional hardware, which means this method can be easily implemented on the legacy routers. Processing packets at a line rate allows the packets to be processed at the actual rate they are being received over a communication line. By processing packets at a line rate, the need to store the packets in a queue prior to processing can be avoided, which consequently avoids the possibility that an attacker may be able to overwhelm the capacity of the queue. One of the many advantages of this approach is in the fact that no additional packet filtering at the customer or peering interfaces is required by the service provider, since only explicitly trusted packets are allowed to be processed by the control CPU and everything else is considered dangerous.

Embodiments in accordance with the present invention may be implemented for various types of network infrastructure. For example, embodiments may be implemented for any IP routing platform, examples of which include Alcatel 7670 and Alcatel 7770.

Embodiments of the present invention may be practiced so as to provide any number of the following advantages:
1. Network re-architecture is not needed; routing protocols remain the same.
2. Since routers drop frames carrying unknown protocols legacy routers would be unaffected. However, by using heavily rate limited queues unmarked control packets (data encapsulated) from legacy routers could still be processed, albeit at a much slower rate. This minimizes the susceptibility of flood-type DoS attacks on the router's control plane while still supporting legacy routers. Note that trusted traffic from routers implementing this mechanism won't share the resources with the untrusted one.
3. One of the many advantages of this approach is in the fact that no additional packet filtering at the customer or peering interfaces is required by the service provider, since preferably only explicitly trusted packets are allowed to be processed by the control CPU and everything else is considered dangerous.

Other considerations, such as the following, may be observed:
1. Marking control packets using a new and unique protocol ID could involve eventually defining the protocol ID for each media type used today, which could be somewhat cumbersome.
2. Marking control packets using a link-local MPLS label could involve more modifications to router microcode, and there is the possibility that the reserved local-link value could be used for transit LSPs by routers that do not support such marking of control packets.

One or more embodiments in accordance with the present invention may provide protection of Internet Service Provider (ISP) router infrastructure from outsider denial of service attacks on control card CPUs.

Embodiments may be used to help secure an Internet Service Provider's router infrastructure from outsider attacks, including (but not limited to) Distributed denial of service (DDoS) attacks based on CPU and/or queue exhaustion, using such techniques as SYN flooding and flooding of invalid MD5-signed routing protocol packets. The presented approach is based on separating encapsulation of control and data packets and does not require any modifications to routing protocols or changes to existing hardware in routers.

The packet authentication mechanisms currently used in Internet routing protocols [OSPF, TCP-MD5] leave a generic threat open for an outside attacker--overloading the control CPUs of the routers with packets that look like they belong to a valid routing protocol adjacency or a peering session, yet are fake and would be discarded because of invalid digest value. Because all IP parameters of valid and faked packets look absolutely identical, it is impossible to reject faked packets earlier in the process. This leads to overloading of internal queues allocated for control traffic (routing and signaling protocols), and hence dropping of legitimate control packets. This, combined with high CPU utilization, results in destruction of routing protocol sessions and finally in denial of service by the network. It is interesting to observe that as security mechanisms in routing protocols become more sophisticated and computationally expensive, it becomes easier for an attacker to mount a CPU-exhaustion-based attack against a router.

Another example of an attack mountable against routers is the simple SYN-flood attack, which could potentially exhaust the router's CPU.

The in-band nature of IP routing and signaling creates a perfect environment for an attacker to put the network itself out of service. The fundamental problems leading to the possibility of a DoS attack on a router are (a) legitimate and forged packets share resources inside the router (such as queues) before the authentication check is performed, and (b) the negative authentication decision is computationally expensive enough to discourage router vendors from performing the check at the line rate. In the latter case, it is important to note that the lack of line-rate processing significantly increases the router's susceptibility to a distributed DoS attack.

### Existing Approaches and Disadvantages

Potential approaches to the problem known to date include:
1. Adding specialized HW elements to the line-card architecture that would allow the line cards to identify packets that need to be authenticated (e.g., OSPF, BGP, RSVP) and perform the MD5 check at the line rate (before the packets are put in any queue), as well as identify TCP SYN packets and limit the rate at which they are sent to the control card
2. Perform aggressive packet filtering at the edges of the network, on both customer-facing and service provider peering interfaces to make sure that packets destined for the internal routers are not received from outside the network.
3. Use a completely separate set of links for control protocols and customer data, i.e. out-of-band network control.

Below are the disadvantages of these methods (correspondingly):
1. From the service provider's perspective, additional HW increases the cost of the system and requires upgrades of the line-cards of all routers in the network. From the Internet security perspective, it will take years before a considerable number of service providers upgrade their routing infrastructure, and thus before the threat of DoS attack on the Internet routing system is sufficiently mitigated.
2. The majority of today's deployed Internet core routers do not have the ability to perform line-rate access control list (ACL) processing at high speeds, which means that the inter-service provider links will remain insecure. Combined with the fact that not all service providers filter potentially dangerous packets on the customer interfaces, this approach has the same disadvantages from the deployment and Internet security perspective as the first approach.
3. While the out-of band control scheme is extremely interesting, implementation could require substantial modification to the routing protocols and complete re-architecting of the service provider networks.

The solution described in this document allows service providers to improve their network without major hardware upgrades, changes to routing protocols or network architecture, and with limited software modifications. It should be noted that while Application Specific Integrated Circuit (ASIC) modifications may be necessitated in certain router implementations, they are extremely simple compared to those required for the alternative solutions discussed above.

### Solution

### Overview

The proposed mechanism uses the fact that there are only a limited number of devices in a network that have a legitimate right to send a packet to a router's control plane. This set of devices includes, of course, other routers in the service provider's network, network operations center (NOC) stations, as well as other trusted devices. The rest of the devices in the Internet, including user hosts, and routers in other service provider networks should not need to send packets to the routers internal to the first provider's network.

They key aspect of the proposal is marking packets from the set of trusted devices in a way that it would either be impossible to spoof by an untrusted device or that would ensure that even if an attacker created such a packet, it would be dropped by the routers already deployed in the Internet today. One option of such marking described in this document is using a different protocol ID in the layer-2 frames when sending IPv4 control packets among the routers. We call this "control IPv4 encapsulation". All Internet routers used today will drop these packets as unrecognized by default. This step makes sure that such a packet marking technique can be relied upon.

The next step is a small modification to the router's forwarding logic to normally allow only control-encapsulated IPv4 packets to be sent to the control plane (other packets may be put on a heavily rate-limited queue or dropped). Note that this check has O(1) complexity, and can easily be performed at line rate. This step ensures that when an attacker injects forged packets into the network, those packets do not affect the control plane infrastructure of the network. One of the many advantages of this approach is in the fact that no additional packet filtering at the customer or peering interfaces is required by the service provider, since only explicitly trusted packets are allowed to be processed by the control CPU, and everything else is considered dangerous.

### Separating Data and Control Encapsulation

As discussed before, the packet marking technique needs to have the property of default invalidity in order to make sure that no data flowing on the Internet today is considered as control- encapsulated and would be accepted into the Internet even if an attacker tried to spoof such marking. Using techniques like Differentiated Services Code Point (DSCP)-code marking does not satisfy this requirement, as it would require filtering at every customer-facing router in the Internet to make sure that no user data packet is injected with this reserved DSCP value. The last example is the reason it may be preferable to use a layer-2 encapsulation technique to achieve this-frames carrying unknown protocols are dropped by today's deployed routers.

This document describes two possible methods for a different layer-2 encapsulation-a separate protocol ID, and a link-local MPLS label. Each has its own advantages and disadvantages discussed below.

### Option 1: New Protocol ID

As a protocol ID value is defined for IPv4 and IPv6 for each used media type today (such as Ether_type code), it would be possible to define IPv4-control and IPv6-control protocol IDs.

The advantage of this method is an implicit 100% guarantee that if the protocol ID is selected from an unused space, the packets will be unrecognized. Also, this approach may be used to provide a more generally applicable solution.

The disadvantage of this approach is that the control encapsulation protocol ID will need to be defined for each media type used today, which may take a while. Another disadvantage is that in case of an MPLS network, a control packet maybe put on an LSP together with data packets, so the receiving router wouldn't be able to tell the difference. Getting around this problem may require maintaining two sets of next-hops per route in the data path.

### Option 2: Link-local MPLS Label

This method may be more expediently implemented in existing network architectures and utilizes the fact that MPLS encapsulation is either defined for or mapped to most of today's used media types. It should be possible to reserve a single label value (or 2 if a separate one for IPv6 is deemed necessary), declare it to be link-local, disallow this value from being used for transit MPLS LSPs, and use this as the control encapsulation. Note that since the label would only have significance on the local link, it can be reused on all links. Control messages used for signaling of transit label switched paths (LSPs) can be safely put on top of this label, as there are no order of origin dependencies. Routers that do not support MPLS would not need to have any MPLS code added and could just treat this as a special sequence of octets in the link frame that identifies control encapsulation.

The advantage of this approach is that only a single value for the label would need to be reserved. Another advantage is that if the described mechanism is deployed within a MPLS network, and a control packet is put on an LSP, the reserved label could be added to the label stack to indicate a control packet to the receiving router.

The disadvantages are that more modifications of the router microcode are necessary, and the potential possibility that the reserved value could be used for transit LSPs by routers that do not support the described mechanism.

### Option 3: Combined

It is possible to use the new protocol ID whenever a control packet is not MPLS -encapsulated, and use an extra reserved label whenever it is put on an LSP.

Control-plane software is then modified to make sure that all locally originated packets that are relevant within the service provider's network only (such as routing protocols, MPLS signaling, telnet, Secure Shell (ssh), Simple Network Management Protocol (SNMP), etc.) are control-encapsulated when the outbound interface is configured as such. Control packets that need to be received by the users (ICMP) are encapsulated as before.

### Interface Groups

When deploying this mechanism, the service provider will need to identify a group of interfaces where the control encapsulation should or should not be used. There will most probably be a group of interfaces used for the backbone connection, and another group used for customer connections and peering with other service providers.

The described mechanism uses the notion of an "interface group". There is practically no complexity associated with an interface group-each interface has an interface-group attribute associated with it. Two interfaces are considered to be in one interface group if their interface-group attributes are equal. The service provider is expected to configure the interface group attributes of the interfaces to match the trust communities, as in the following example. Backbone interfaces, interfaces to customer A, interfaces to customer B, interfaces to service provider X, and interfaces to service provider Y, would all be put h separate interface-groups: "backbone", "cust-A", "cust-B", "peer-X", "peer- Y", correspondingly.

As we will see further in the document, forwarding of control-encapsulated packets between the interface groups is forbidden. This is to ensure that if two service providers are using control encapsulation for their External Border Gateway Protocol (eBGP) session, or if an eBGP session between a service provider and a customer is control-encapsulated, potentially forged packets destined inside of the service provider's network do not go beyond the border router. In other words, we allow control traffic from a customer or another service provider to go only as far as it needs to go and no further.

### Modified Forwarding Algorithm

The following new interface parameters used by the modified forwarding algorithm are introduced.

**InterfaceGroup:** the ID of the group to which the interface belongs.
**IpCtlSendEncap:** defines which encapsulation should be used on the interface to send control packets originated locally by the router or received as control-encapsulated on another interface. Possible values: Data, and Control. Default: Data.
**IpCtlRcvEncap:** defines the type of encapsulation that needs to be used in order for the received packet to be allowed for local processing by the (Rendezvous Point (RP). Values: Data, Control, Both (This value allows a service provider to transition from Data to Control encapsulation without resetting existing adjacencies). Default: Data.

Following is an example of Command Line Interface (CLI) commands that can be used to configure these parameters:

```
       interface <name>
       group <group-name>
       ip control-send-encapsulation {data|control}
       ip control-rcv-encapsulation {data|control|both}
```

The forwarding algorithm of the routers is modified as follows. It is convenient to describe changes to the algorithm using the "Trusted" characteristic of the packet.
1. A packet addressed to the router itself is considered Trusted and is allowed to be locally processed (queued to the control card) if IpCtlRcvEncap of the receiving interface is set to Both, or matches the encapsulation that was used to send the received packet. Otherwise, the packet is dropped or put on a "slow" queue. (Instead of being dropped, the packet may still be allowed in, but placed on a heavily rate-limited low-priority queue. Such a technique may be applied, for example, to ICMP packets.)
2. The router considers a transit packet Trusted and attempts to use Control encapsulation on the outbound interface if:
   a) The packet was received in Control encapsulation AND
   b) If InterfaceGroup parameters of the inbound and outbound interfaces are the same (we do not trust the packet anymore once it is outside its trust domain). (This behavior has at least two advantages: control packets received from another service provider or a customer, leaving their trust domain and being injected inside the service provider's network are automatically considered untrusted and treated as Data; and Control packets originated inside the service provider's network, but addressed to a host outside the network are automatically converted to Data as they leave the network.)
      Untrusted transit packets are always sent out of the box using Data encapsulation
3. Locally originated packets are always considered trusted and the router always attempts to send them using Control encapsulation.

The IP encapsulation algorithm is changed as follows. Note that Control or Data encapsulation can be requested by the submitter of the packet (control plane software in case of a locally originated packet or IP forwarder in case of a transit packet):
1. If the packet is untrusted, send the packet out of the interface using Data encapsulation.
2. Otherwise (the packet is trusted):
   c) if IpCtlSndEncap of the next- hop interface is Control, send the packet using Control encapsulation.
   d) Otherwise (IpCtlSndEncap = Data), send the packet using data encapsulation.

### NOC Support and "Trusted" Interfaces

Hosts on the NOC segments of the service provider's network are an example of trusted devices that are not routers. Howe ver, unlike routers, it is unrealistic to expect hosts within the NOC segment to exchange packets using Control encapsulation, as this would require modification to many operating systems. Another specific of a NOC segment is the fact that it majority of cases, it will need to be able to communicate with the rest of the service provider's network using both Data and Control encapsulated packets. The following is an explanation why.

It is already a common practice to allow incoming telnet, ssh, and SNMP packets to routers only if they were originated within a NOC segment (this is usually done by configuring CLI and SNMP-specific filters by access control lists), however, the network administrators are rarely physically located on the NOC premises-many of them work from home and are often mobile. This is why management access to the routers usually requires establishing a secure shell (SSH) session to a server in the NOC, and then from there another SSH session to a router. Of course, the SSH server is usually behind a firewall (referred to hereafter as FW 1). In our case, this would be a firewall that communicates Data packets with the rest of the service provider's network.

Since all telnet, ssh, snmp, etc. packets going from the NOC segment to the routers in the network need to appear in Control encapsulation, regular data packets exchanged on the NOC segment at some point need to be sent out as Control encapsulated packets. This, of course, introduces a potential security threat (if the hosts on the NOC segment were used to attack the routers, all forged packets would be considered by routers as trusted.) However, it is much less expensive for a service provider to protect its routers from its own NOC segments by installing a firewall (referred to hereafter as FW2) that will make sure that only valid packets are sent out as control to the routers in the network.

Note that FW1 and FW2 are only functionally separate, but may physically be the same device.

There are potentially two ways how NOC data packets can be injected as Control into the network: a) FW2's network-facing interface supports Control encapsulation, and b) FW2 has no support of Control encapsulation, but the first-hop router it is connected to performs the "translation". The former case is the most secure, while the latter is the most probable, at least in the beginning. Below is how the router performs the translation function.

### The notion of a "trusted interface" is defined by introducing the following parameter:

**IpTrustedInterface:** When True, identifies a trusted interface. It is expected that only very few interfaces in the service provider's network will be configured as Trusted (for example, interfaces connecting a NOC segment to the rest of the network through a firewall.) Possible values: True, and False. Default: False.

It should be noted that because misuse of this command may present a substantial security breach, it may make sense to make it hidden, and take other precautions, such as disallow it if more than one interface group is configured in the router, etc.

Following is an example of a CLI command that can be used to configure it.

```
       interface <name>
       ip trusted-interface
```

The router's behavior is further modified to accommodate the notion of trusted interface as follows:
1. A packet received on a Trusted interface in any encapsulation is treated as if it was received in Control encapsulation (i.e., is allowed to be locally processed and is sent out using Control encapsulation as long as it stays within the same interface group).
2. All packets (trusted and untrusted) sent out of a Trusted interface are Data-encapsulated.

It should be noted that, in some embodiments, it may be desirable to allow only trusted packets to be sent on a Trusted interface towards NOC. This will make the job of FW2 much easier, but will cut off ICMP messages coming from outside the network or from a different trust domain if the service provider has many.

### ICMP, Ping, and Traccroute

ICMP is a special case in this architecture, because its scope of validity is not so well contained as for routing and signaling protocols. Let's consider the following generic combinations for ICMP messages:
1. Originated and received by devices within the same trust domain, for example, an ICMP Echo Request message originated by a NOC host and received by a router. The same is true for an ICMP Echo Reply. No issues here.
2. Originated by a trusted device (router), received by an untrusted one. The router will inject the packet using Control encapsulation, however, as the packet leaves the service provider's network, it will be sent out using Data encapsulation (see step 2 b in the modified forwarding algorithm), as expected by the received.
3. Originated by an untrusted host, addressed to a service provider's router. The mechanism described in this document won't allow the router to locally process the ICMP packet. This, in fact, is a security feature protecting the router from ping floods. If the administrator needs to ping a router, they should do so from the NOC segment. On the other hand, real implementations will probably leave the possibility for untrusted packets to still be received by routers, but will put them on a very low priority, heavily rate-limited queue, which will still allow the admin to ping a router from outside of the network.
4. Originated by and addressed to an untrusted host. The message will enter and leave the network as Data.

Traceroute from the outside world does not present any problem, because Control-encapsulated ICMP messages sent back to the probing host will be automatically converted to Data as they leave the trust domain.

Traceroute within the network (e.g., from NOC or a router) is not a problem because the messages are exchanged in Control encapsulation. If traceroute crosses multiple trust domains or goes outside the service provider's network, ICMP messages will come back as Data and will go through a firewall (FW) to NOC or may be received through the slow queue by the router (if traceroute is originated by the router.)

### Routing Protocols

One of the great advantages of the described mechanism is that no modification of existing routing protocols is required. Routing protocols still work over IPv4, the only difference is actual layer-2 encapsulation of those packets, which is (in the simplest case) Control for all packets originated by a router.

The routing paradigm remains practically the same-the messages are sent inbound across the same physical links as data packets. Control and data are only virtually separated, just enough to make a decision on whether a packet should be allowed to the control plane or not.

Because the Intermediate System to Intermediate System (IS-IS) routing protocol encapsulates its Protocol Data Units (PDUs) in L2 frames, as opposed to IP packets, it is not susceptible to the outsider attacks, and hence no modification to IS-IS encapsulation is required. If IS-IS-in-IP is used, the routers need to make sure that the IP packets is Control-encapsulated. Note that the fact the IS-IS routing protocol is not susceptible to outsider attacks does not mean that ISP running IS- IS should not be worried about those attacks. There's a whole set of potential CPU-based attacks which an outsider could mount, and this set is constantly growing.

### Multicast

There are two aspects of IP multicast we're interested in from the routing security point of view: routing protocols, and (S,G) state.

From the routing protocols perspective, service provider's routers are protected by the presented mechanism as with unicast.

The link between data and control plane required to maintain the (S,G) state is part of the multicast architecture and may be considered by some as an architectural mistake (it is definitely safer to decouple control and data planes of the network as much as possible), and presented security mechanism does not affect it in anyway. The service provider will have to make an informed decision whether to deploy multicast in its network or not keeping in mind the possibility of some router implementations not being able to keep up with large amounts of (S,G) state.

### MPLS Networks

When the mechanism is deployed in an MPLS network, it is possible for any IP packet (including a control one) that is sent over multiple hops to be put on an LSP due to an Label Switching Router (LSR) using either Label Distribution Point (LDP)- derived Forwarding Equivalence Classes (FECs) or Interior Gateway Protocol (IGP)-shortcut FECs. Because layer-2 encapsulation is not preserved when an IP packet is put on an LSP, it will be impossible for the receiving router to tell the difference between data and control packets.

To solve this problem, the LSR putting the control packet on an LSP, adds an extra inner label with the reserved value described before to the label stack.

If penultimate hop popping (PHP) is used in the network, the tail-end LSR may not even notice the fact that the packet has traveled on a LSP if the MPLS -label approach is used for encapsulation, because the LSR will receive the packet with only one-eserved-label.

If the PHP mechanism is not used, the receiving LSR, after popping the outer label, will need to recognize the reserved value of the inner label and treat the packet as Control-encapsulated.

### Security Considerations

The described proposal does not claim to provide complete protection of routers against all types of attacks. Instead, it raises the bar by attempting to prevent attacks mounted by outsiders that have no access to the Service Provider's (SP's) network except for basic IP connectivity. These types of attacks are considered to be the immediate threat on the Internet routing system and the proposal attempts to protect against it without requiring expensive hardware upgrades. By virtually separating control and data packets, the level of security in IP networks is raised to the one normally found in Asynchronous Transfer Mode (ATM) or Frame Relay networks, where routing signaling and virtually out-of-band. This level of security is considered by many to be just enough to feel comfortable.

Insider attacks, based on the physical access to the SP's equipment or on compromising a trusted device (such as a router or a NOC-attached host) are not prevented by this mechanism.

The described proposal relies on the notion of a trust domain, which implies that if a router is configured to accept Control-encapsulated packets on an interface, the administrator has full control of the devices attached to the segment and capable of sending Control-encapsulated packets (in reality, any connected device should be assumed to be capable of doing so), and those devices are authorized to send them. In other words, physical security needs to be insured by the SP. This practically means that no devices that with high probability can be compromised by an outside attacker (such as servers, or hosts) should be allowed on the segments used for router connections. Point-to-point links used between routers encourage this requirement by their very nature, while Local Area Network (LAN) segments require more attention to ensure no unauthorized devices have access to them. Fortunately, this is already the best current practice that the service providers follow.

Finally, because the described mechanism does not prevent from insider attacks, it should not be considered as a substitute for existing or future authentication mechanisms in routing protocols or other security measures used in the service provider networks (e.g., SSH). Instead, they should be considered complimentary to each other and used together. In fact, the more elaborate and computationally expensive routing protocol- specific mechanisms become, the easier it will be for an outside attacker to bring a router to its knees, and the more important it will be to separate control and data encapsulation in the Internet.

### Deployment Considerations

The following subsections discuss how the described mechanism would be deployed in a service provider's network. Note that we consider the final setup, after all transitional steps. The transition scenarios are described in a separate subsection

### Backbone-only Routers

Routers where all interfaces are connected to internal links will most often have all of them configured to be in the same interface group. It is possible of course, to have multiple Control trust domains within a single service provider's network if for example, BGP Autonomous System (AS) confederations are used. In this case, each member-AS would be a separate trust domain and some BGP speakers would have more than one interface group. One consideration related to running a network with multiple trust domains is the fact that control message that are not naturally scoped to a single trust domain (such as ICMP) will be encapsulated as Data once they leave the trust domain they have been originated in. This means that Control encapsulation-aware firewalls connecting the NOC segment need to also receive and process Data-encapsulated ICMP.

Receiving and sending encapsulation of control packets would be set to Control on all interfaces.

### Customer-facing Routers

Customer facing routers will have more than one interface group.

One group will be configured for all backbone links. In this group receive and send encapsulation will be configured as Control.

For each customer, all interfaces providing connections to it will be configured as a separate interface group. The type of encapsulation is expected to be Data for a long time, before customer routers start supporting Control encapsulation. With Data encapsulation, the router is allowed to send Data-encapsulated control packets to the control plane CPU. Other packets, supposedly both valid data and potentially forged packets, are forwarded onwards to the network using Data encapsulation, so other routers in the network won't allow these packets to the control plane in case of an attack.

When Control encapsulation is supported by the customer routers, the service provider will configure send and receive control packet encapsulation on those links to be Control. This will prevent DoS attacks on the customer-facing router on those links.

### Peer-facing Routers

Peer-facing routers will be configured similar to the customer-facing routers. If the peering routers do not support Control encapsulation, the routers are configured to allow Data-encapsulated packets to be received by the control CPU. Potential attacks against the border router could be prevented using the BGP Time To Live (TTL) security hack by setting the TTL value for BGP packets and rejecting packets having TTL values outside of a given range (though implementing Control encapsulation would likely provide an easier solution). A service provider's internal routers will not be susceptible to the attacks originated in other service providers, because forged packets will be sent as Data and won't be allowed to the routers' control plane CPUs. When Control encapsulation is supported, the border router will be protected from the DoS attack on the links to those service providers supporting this technique.

An important point to keep in mind here is the fact that trust domains of the service providers are not merged when they peer with each other. Links used to peer with other service providers are put in a separate interface group from the backbone interface group. This means that even if routers of another service provider are compromised and forged packets are sent as Control to us, they would first be translated to Data encapsulation by that service provider's border router, but even if they are not for some reason (or if the service provider's border router is compromised), our border router will "translate" any forged control packets into Data as they cross the boundary between the peering and the backbone interface group.

### NOC

As describe before, NOC segments can be connected to a service provider's network either through a Control-encapsulation-aware FW, or through a regular FW connected to a router implementing Trusted interfaces.

### Transition Scenarios

No flag day: initially a network operates without deployment of at least one embodiment of the present invention.

Incremental deployment - hop-by-hop protocols: at least one embodiment of the present invention may be incrementally deployed by beneficially applying it to hop-by-hop protocols.

Incremental deployment - multi-hop protocols: at least one embodiment of the present invention may be incrementally deployed by beneficially applying it to multi-hop protocols. Such incremental deployment may or may not build upon previous incremental deployment, such as the above-described application to hop-by-hop protocols.

Incremental Deployment - customer interfaces: at least one embodiment of the present invention may be incrementally deployed by beneficially applying it to customer interfaces. Such incremental deployment may or may not build upon previous incremental deployment, such as the above-described application to hop-by-hop protocols and/or multi-hop protocols.

Incremental Deployment - peering interfaces: at least one embodiment of the present invention may be incrementally deployed by beneficially applying it to peering interfaces. Such incremental deployment may or may not build upon previous incremental deployment, such as the above-described application to hop-by-hop protocols, multi-hop protocols, and/or customer interfaces.

Accordingly, a method and apparatus for secure communication of control information in a communication network and for protection of network elements from malicious transmissions has been described. It should be understood that the implementation of other variations and modifications of the invention in its various aspects will be apparent to those of ordinary skill in the art, and that the invention is not limited by the specific embodiments described. It is therefore contemplated to cover by the present invention, any and all modifications, variations, or equivalents that fall within the scope of the following claims.

## Claims

1. A method of protecting network devices against Denial of Service DoS attacks, **characterized in that** it comprises the steps of:
- marking (215) packets carrying Layer-3 control information transmitted by trusted network devices, belonging to said communication network by encapsulating (218) the packets at Layer-2;
- determining at a network device if an incoming control packet is a marked control packet or an unmarked control packet;
- processing said marked control packet at said network devices as a legitimate control packet (123, 124); and
- processing said un-marked control packet at said network device as a forged control packet.

2. The method of claim 1 wherein the step of marking further comprises:
marking the packets using a unique protocol identifier.

3. The method of claim 1 wherein the step of marking further comprises:
marking the packets using a link-local MPLS label.

4. The method of claim 1 further comprising the step of:
applying interface groups to determine when marking of control packets is to be done.

5. The method of claim 4 wherein the step of applying interface groups further comprises the step of:
applying interface groups to packet communications within a particular interface group.

6. The method of claim 5 wherein the step of applying interface groups to packet communications within a particular interface group further comprises the step of:
applying interface groups to packet communications within a backbone interface group.

7. The method of claim 5 wherein the step of applying interface groups to packet communications within a particular interface group further comprises the step of:
applying interface groups to packet communications within a customer-specific interface group.

8. The method of claim 5 wherein the step of applying interface groups to packet communications within a particular interface group further comprises the step of:
applying interface groups to packet communications within a peer interface group.

9. The method of claim 4 wherein the step of applying interface groups further comprises the step of:
applying interface groups to packet communications between interface groups.

10. The method of claim 9 wherein the step of applying interface groups to packet communications between interface groups further comprises the step of:
applying interface groups to packet communications between backbone and customer-specific interface groups.

11. The method of claim 9 wherein the step of applying interface groups to packet communications between interface groups further comprises the step of:
applying interface groups to packet communications between customer-specific and peer interface groups.

12. The method of claim 9 wherein the step of applying interface groups to packet communications between interface groups further comprises the step of:
applying interface groups to packet communications between backbone and peer interface groups.

13. The method of claim 4 wherein the step of applying interface groups further comprises the step of:
applying interface groups to communication of ICMP packets.

14. The method of claim 4 wherein the step of applying interface groups further comprises the step of:
applying interface groups to communication of ping packets.

15. The method of claim 4 wherein the step of applying interface groups further comprises the step of:
applying interface groups to communication of traceroute packets.

16. The method of claim 4 wherein the step of applying interface groups further comprises the step of:
applying interface groups to communication of packets from Network Operations Center (NOC) hosts.

17. Apparatus for communicating Layer-3 control information in a communications network comprising means for implementing the method according to anyone of claims I to 16.

## Patentansprüche

1. Ein Verfahren des Schutzes von Netzgeräten gegen Denialof-Service-Angriffe (DoS-Angriffe), **dadurch gekennzeichnet, daß** es die Schritte umfaßt:
- Markieren (215) der Pakete, die Schicht-3-Kontrollinformationen übertragen, die durch vertrauenswürdige zum Kommunikationsnetz gehörende Netzgeräte gesendet wurden, durch Einkapseln (218) der Pakete auf Schicht-2;
- Bestimmen auf einem Netzgerät, ob ein kommendes Steuerpaket ein markiertes Steuerpaket oder ein unmarkiertes Steuerpaket ist;
- Verarbeiten des markierten Steuerpakets auf Netzgeräten als ein berechtigtes Steuerpaket (123, 124); und
- Verarbeiten des unmarkierten Steuerpakets auf Netzgeräten, als ein gefälschtes Steuerpaket.

2. Das Verfahren nach Anspruch 1, in welchem der Schritt des Markierens außerdem umfaßt:
Markieren der Pakete unter Verwendung einer eindeutigen Protokollkennung.

3. Das Verfahren nach Anspruch 1, in welchem der Schritt des Markierens außerdem umfaßt:
Markieren der Pakete unter Verwendung eines verbindungslokalen MPLS-Labels.

4. Das Verfahren nach Anspruch 1, außerdem umfassend den Schritt:
Anwenden der Schnittstellengruppen, um zu bestimmen, wann das Markieren der Steuerpakete durchzuführen ist.

5. Das Verfahren nach Anspruch 4, in welchem der Schritt des Anwendens der Schnittstellengruppen außerdem den Schritt umfaßt :
Anwenden der Schnittstellengruppen auf Paketübertragungen innerhalb einer speziellen Schnittstellengruppe.

6. Das Verfahren nach Anspruch 5, in welchem der Schritt des Anwendens der Schnittatellengruppen auf Paketübertragungen innerhalb einer speziellen Schnittstellengruppe außerdem den Schritt umfaßt :
Anwenden der Schnittstellengruppen auf Peketübertragungen innerhalb einer Backbone-Schnittstellengruppe.

7. Das Verfahren nach Anspruch 5, in welchem der Schritt des Anwendens der Schnittstellengruppen auf Paketübertragungen innerhalb einer speziellen Schnittstellengruppe außerdem den Schritt umfaßt:
Anwenden der Schnittstellengruppen auf Paketübertragungen innerhalb einer kundenspezifischen Sehnittstellengruppe.

8. Das Verfahren nach Anspruch 5, in welchem der Schritt des Anwendens der Schnittstellengruppen auf Paketübertragungen innerhalb einer speziellen Schnittstellengruppe außerdem den Schritt umfaßt:
Anwenden der Schnittstellengruppen auf Paketübertragungen innerhalb einer Peer-Schnittstellengruppe.

9. Das Verfahren nach Anspruch 4, in welchem der Schritt des Anwendens der Schnittstellengruppen außerdem den Schritt umfaßt :
Anwenden der Schnittstellengruppen auf Paketübertragungen zwischen Schnittstellengruppen.

10. Das Verfahren nach Anspruch 9, in welchem der Schritt des Anwendens der Schnittstellengruppen auf Paketübertragungen zwischen Schnittstellengruppen außerdem den Schritt umfaßt:
Anwenden der Schnittstellengruppen auf Paketübertragungen zwischen Backbone- und kundenspezifischen Schnittstellengruppen.

11. Das Verfahren nach Anspruch 9, in welchem der Schritt des Anwendens der Sehnittstellengruppen auf Paketübertragungen zwischen Schnittstellengruppen außerdem den Schritt umfaßt:
Anwenden der Schnittstellengruppen auf Paketübertragungen zwischen kundenspezifischen und Peer-Schnittstellengruppen.

12. Das Verfahren nach Anspruch 9, in welchem der Schritt des Anwendens der Schnittstellengruppen auf Paketübertragungen zwischen Schnittstellengruppen außerdem den Schritt umfaßt:
Anwenden der Schnittstellengruppen auf Paketübertragungen zwischen Backbone- und Peer-Schnittstellengruppen.

13. Das Verfahren nach Anspruch 4, in welchem der Schritt des Anwendens der Schnittstellengruppen außerdem den Schrift umfaßt:
Anwenden der Schnittstellengruppen auf die Übertragung von ICMP-Paketen.

14. Das Verfahren nach Anspruch 4, in welchem der Schritt des Anwendens der Schnittstellengruppen außerdem den Schritt umfaßt:
Anwenden der Schnittstellengruppen auf die Übertragung von Ping-Paketen.

15. Das Verfahren nach Anspruch 4, in welchem der Schritt des Anwendens der Schnittstellengruppen außerdem den Schritt umfaßt:
Anwenden der Schnittstellengruppen auf die Übertragung von Traceroute-Paketen.

16. Das Verfahren nach Anspruch 4, in welchem der Schritt des Anwendens der Schnittstellengruppen außerdem den Schritt umfaßt:
Anwenden der Schnittstellengruppen auf die Übertragung von Paketen von Hosts des Network Operations Center (NOC).

17. Vorrichtung für Übermitteln von Schicht-3-Kontrollinformationen in einem Kommunikationsnetz, umfassend Mittel zum Implementieren des Verfahrens nach einem der Ansprüche 1 bis 16.

## Revendications

1. Procédé de protection de dispositifs de réseau contre les attaques de Déni de Service DoS, **caractérisé en ce qu'**il comprend les étapes de :
- marquage (215) des paquets portant des informations de contrôle de Couche 3 par des dispositifs de réseau de confiance, appartenant audit réseau de communication en encapsulant (218) les paquets au niveau de la Couche 2 ;
- détermination au niveau d'un dispositif de réseau si un paquet de contrôle entrant est un paquet de contrôle marqué ou un paquet de contrôle non marqué ;
- traitement dudit paquet de contrôle marqué au niveau desdits dispositifs de réseau comme un paquet de contrôle légitime (123, 124) ; et
- traitement dudit paquet de commande non marqué au niveau dudit dispositif de réseau comme un paquet de commande contrefait.

2. Procédé selon la revendication 1, dans lequel l'étape de marquage comprend en outre :
le marquage des paquets au moyen d'un identifiant de protocole unique.

3. Procédé selon la revendication 1, dans lequel l'étape de marquage comprend en outre :
le marquage des paquets au moyen d'un descriptif MPLS local à la liaison.

4. Procédé selon la revendication 1, dans lequel l'étape de marquage comprend en outre l'étape :
d'application de groupes d'interfaces afin de déterminer quand effectuer le marquage des paquets de contrôle.

5. Procédé selon la revendication 4, dans lequel l'étape d'application de groupes d'interfaces comprend en outre l'étape :
d'application de groupes d'interfaces aux communications de paquets au sein d'un groupe d'interfaces particulier.

6. Procédé selon la revendication 5, dans lequel l'étape d'application de groupes d'interfaces aux communications de paquets au sein d'un groupe d'interfaces particulier comprend en outre l'étape :
d'application de groupes d'interfaces aux communications de paquets au sein d'un groupe d'interfaces de coeur de réseau.

7. Procédé selon la revendication 5, dans lequel l'étape d'application de groupes d'interfaces aux communications de paquets au sein d'un groupe d'interfaces particulier comprend en outre l'étape :
d'application de groupes d'interfaces aux communications de paquets au sein d'un groupe d'interfaces spécifique au client.

8. Procédé selon la revendication 5, dans lequel l'étape d'application de groupes d'interfaces aux communications de paquets au sein d'un groupe d'interfaces particulier comprend en outre l'étape :
d'application de groupes d'interfaces aux communications de paquets au sein d'un groupe d'interfaces homologue.

9. Procédé selon la revendication 4, dans lequel l'étape d'application de groupes d'interfaces aux communications de paquets au sein d'un groupe d'interfaces particulier comprend en outre l'étape :
d'application de groupes d'interfaces aux communications de paquets entre des groupes d'interfaces

10. Procédé selon la revendication 9, dans lequel l'étape d'application de groupes d'interfaces aux communications de paquets entre des groupes d'interfaces comprend en outre l'étape :
d'application de groupes d'interfaces aux communications de paquets entre des groupes d'interfaces de coeur de réseau et des groupes d'interfaces spécifiques au client.

11. Procédé selon la revendication 9, dans lequel l'étape d'application de groupes d'interfaces aux communications de paquets entre des groupes d'interfaces comprend en outre l'étape :
d'application de groupes d'interfaces aux communications de paquets entre des groupes d'interfaces spécifique au client et homologue.

12. Procédé selon la revendication 9, dans lequel l'étape d'application de groupes d'interfaces aux communications de paquets entre des groupes d'interface comprend en outre l'étape :
d'application de groupes d'interfaces aux communications de paquets entre des groupes d'interfaces de coeur de réseau et des groupes d'interfaces homologues.

13. Procédé selon la revendication 4, dans lequel l'étape d'application de groupes d'interfaces comprend en outre l'étape :
d'application de groupes d'interfaces aux communications de paquets ICMP.

14. Procédé selon la revendication 4, dans lequel l'étape d'application de groupes d'interfaces comprend en outre l'étape :
d'application de groupes d'interfaces aux communications de paquets ping.

15. Procédé selon la revendication 4, dans lequel l'étape d'application de groupes d'interfaces comprend en outre l'étape :
d'application de groupes d'interfaces aux communications de paquets Traceroute,

16. Procédé selon la revendication 4, dans lequel l'étape d'application de groupes d'interface comprend en outre l'étape :
d'application de groupes d'interfaces aux communications de paquets provenant d'hôtes du Centre d'Opérations de Réseau (NOC).

17. Appareil de communication d'informations de contrôle de Couche 3 dans un réseau de communication comprenant un moyen pour mettre en oeuvre le procédé selon l'une quelconque des revendications 1 à 16.
